# EUROPÄISCHE PATENTSCHRIFT

(11) **EP 1 459 963 B1**
(45) Veröffentlichungstag und Bekanntmachung des Hinweises auf die Patenterteilung: **07.06.2006**
(21) Anmeldenummer: 04002642.9
(22) Anmeldetag: 06.02.2004
(51) Int. Cl.: B62D 15/02, B62D 13/00

(54) **Kraftfahrzeug**
Motor vehicle
Véhicule automobile

(30) Priorität: 21.03.2003 DE 10312548
(43) Veröffentlichungstag der Anmeldung: 22.09.2004
(73) Patentinhaber: AUDI AG, 85045 Ingolstadt (DE)
(72) Erfinder: Schilgen, Olaf Ludger, 85057 Ingolstadt (DE)
(74) Vertreter: Thielmann, Frank

(56) Entgegenhaltungen:
- FR-A1- 2 515 379
- US-A- 4 848 499
- US-A- 5 247 442
- US-A- 5 455 557

## Beschreibung

Die vorliegende Erfindung betrifft ein Kraftfahrzeug mit wenigstens zwei am Heck angeordneten Abstandssensoren, die in einer bestimmten Entfernung voneinander symmetrisch zur Mittellängsachse des Kraftfahrzeugs positioniert sind.

Bei Kraftfahrzeugen werden am Heck angeordnete Abstandssensoren zumeist als Einparkhilfen eingesetzt. Beim Einlegen des Rückwärtsgangs werden sie aktiviert und geben in Abhängigkeit von dem ermittelten Abstand zu einem hinter dem Kraftfahrzeug befindlichen Hindernis ein optisches oder akustisches Signal aus. Mit Hilfe dieses Signals kann der Fahrer des Kraftfahrzeugs den Einparkvorgang optimieren, ohne dabei das Heck des Kraftfahrzeugs oder das Hindernis zu beschädigen.

Aus der Druckschrift DE 100 30 738 C1, welches die Merkmale des Oberbegriffs von Anspruch 1 zeigt, ist eine Anordnung zur Bestimmung des Knickwinkels zwischen einem Zugfahrzeug und einem Anhänger oder Auflieger bekannt. Diese Anordnung enthält zwei Ultraschalltransceiver, die auf zwei unterschiedlichen Signalstrecken Ultraschallimpulse aussenden und empfangen. Die Ultraschalltransceiver sind hierbei am Zugfahrzeug angebracht und senden die Ultraschallsignale in Richtung Anhänger. Am Anhänger sind passive Reflektoren angebracht, deren Oberfläche einen Teil der Signalenergie wieder zu den Transceivem zurückreflektiert. Die Ultraschalltransceiver sind über eine Schnittstelle mit einem Bordrechner verbunden, in welchem aus den Laufzeiten der Ultraschallimpulse beider Messrichtungen die Länge der Signalstrecken ermittelt werden und aus den Signalstrecken und den geometrischen Abmessungen der Anordnung der Knickwinkel zwischen dem Zugfahrzeug und dem Anhänger ermittelt wird. Bei dieser Anordnung kann für eine hinreichend genaue Knickwinkelbestimmung jedoch nicht auf die Reflektoren am Anhänger verzichtet werden.

Vor diesem Hintergrund ist es Aufgabe der vorliegenden Erfindung ein verbessertes Kraftfahrzeug bereitzustellen, dessen Abstandssensoren je nachdem, ob ein Anhänger angehängt ist oder nicht, zur Abstandsbestimmung oder zur Knickwinkelbestimmung dienen. Zudem soll dies kostengünstig realisierbar sein.

Gelöst wird diese Aufgabe, indem an dem Kraftfahrzeug ein Erkennungssensor zur Erkennung eines angehängten Anhängers vorgesehen ist und die beiden Abstandssensoren in Abhängigkeit von dem Signal des Erkennungssensors in einem ersten oder zweiten Betriebsmodus arbeiten, wobei sie im ersten Betriebsmodus, d.h. wenn kein Anhänger an das Kraftfahrzeug angehängt ist, zur Bestimmung des Abstands zu einem heckseitigen Hindernis bzw. als Einparkhilfe dienen und wobei sie im zweiten Betriebsmodus, d.h. wenn ein Anhänger an das Kraftfahrzeug angehängt ist, zur Bestimmung des Knickwinkels zwischen der Mittellängsachse des Kraftfahrzeugs und der Mittellängsachse des Anhängers dienen, indem die Abstandssensoren aus einer Annäherung der Deichsel des Anhängers den Knickwinkel ermitteln. Durch diese Merkmalskombination sind die Abstandssensoren in doppelter Hinsicht nützlich, wobei sich der erste Betriebsmodus und der zweite Betriebsmodus gegenseitig nicht beeinträchtigen, sondern vielmehr ergänzen. Der erste Betriebsmodus kann auf die Rückwärtsfahrt des Kraftfahrzeugs beschränkt sein, während der zweite Betriebsmodus nicht nur bei der Rückwärtsfahrt, sondern auch bei der Vorwärtsfahrt des Kraftfahrzeugs sinnvoll einsetzbar ist.

Gemäß einer besonderen Weiterbildung der vorliegenden Erfindung arbeiten die Abstandssensoren in ihrem ersten Betriebsmodus mit einer anderen Abtastfrequenz als in ihrem zweiten Betriebsmodus. Dadurch kann die Abtastfrequenz für eine gute Auflösung auf den zu erwartenden Entfernungsbereich eingestellt werden, so dass die Einparkhilfe zum Beispiel auf einen Bereich von ca. 200 bis 2000 Millimeter und die Knickwinkelbestimmung auf einen Bereich von ca. 500 bis 700 Millimeter eingestellt ist.

Und gemäß einer anderen Weiterbildung der Erfindung arbeiten die Abstandssensoren in ihrem ersten Betriebsmodus mit einem anderen Abtastwinkel als in ihrem zweiten Betriebsmodus. Ist der Abtastwinkel des zweiten Betriebsmodus dabei größer als der Abtastwinkel des ersten Betriebsmodus, können damit auch geringe Knickwinkel noch zuverlässig erkannt werden.

Vorteilhaft wird der ermittelte Knickwinkel anhand von Lenkwinkelsensoren während der geraden Vorwärtsfahrt auf "Null" kalibriert. Dadurch können die Abstandssensoren selbst bei unsymmetrischen Anhängerformen noch den jeweiligen Knickwinkel zwischen Kraftfahrzeug und Anhänger ermitteln.

Zweckmäßig wird der ermittelte Knickwinkel einer Einrichtung zur Stabilitätskontrolle zugeführt. Diese Einrichtung zur Stabilitätskontrolle kann dann bei Schwankungen des Knickwinkel die Fahrdynamik regeln, indem der Anhänger in geeigneter Weise gebremst wird.

Außerdem kann der ermittelte Knickwinkel auch einer Rangierhilfeeinrichtung zugeführt werden. Dadurch kann der Fahrer beim Rangieren mit Anhänger unterstützt werden, da die Rangierhilfeeinrichtung Rangierempfehlungen ausgibt und zu große Knickwinkel anzeigt.

Ist der Erkennungssensor zur Erkennung eines angehängten Anhängers in eine ohnehin vorgesehene Steckdose für die elektrische Anbindung des Anhängers integriert, so sind am Kraftfahrzeug keine zusätzlichen Maßnahmen erforderlich.

Die vorliegende Erfindung wird unter Bezugnahme auf die nachfolgenden Zeichnungsfiguren näher erläutert. Es zeigen:
- Fig. 1: eine schematische Darstellung des Kraftfahrzeugs ohne einen Anhänger;
- Fig. 2: das Kraftfahrzeug aus Fig. 1 mit Anhänger; und
- Fig. 3: Kraftfahrzeug und Anhänger aus Fig. 2 mit einem von Null verschiedenen Knickwinkel.

Das Kraftfahrzeug 1 weist an seinem Heck 2 zwei Anstandssensoren 3, 3' und einen Erkennungssensor 4 für einen Anhänger 5 auf. Zudem weist das Kraftfahrzeug 1 eine Anhängerkupplung 6 und eine Steckdose 7 auf, an welche ein Anhänger 5 mit einer Deichsel 8 und einem korrespondierenden Stecker 9 mechanisch und elektrisch angebunden werden kann.

Die beiden Abstandssensoren 3, 3' des Kraftfahrzeugs 1 sind in einer festen Entfernung S voneinander positioniert, wobei sie zur Mittellängsachse M des Kraftfahrzeugs 1 symmetrisch angeordnet sind. Sie sind als Ultraschallsensoren ausgeführt und strahlen ihr Messsignal zum Beispiel mit einer ersten Frequenz Fa von 50 Kilohertz innerhalb einer ersten Winkelbereiches βa von ca. 20 Grad nach hinten ab.

Der Erkennungssensor 4 des Kraftfahrzeugs 1 ist in die Steckdose 7 für die elektrische Anbindung des Anhängers 5 integriert. Auf diese Weise zeigt der Erkennungssensor 4 zuverlässig an, wenn ein Anhänger 5 mit dem Kraftfahrzeug 1 verbunden ist.

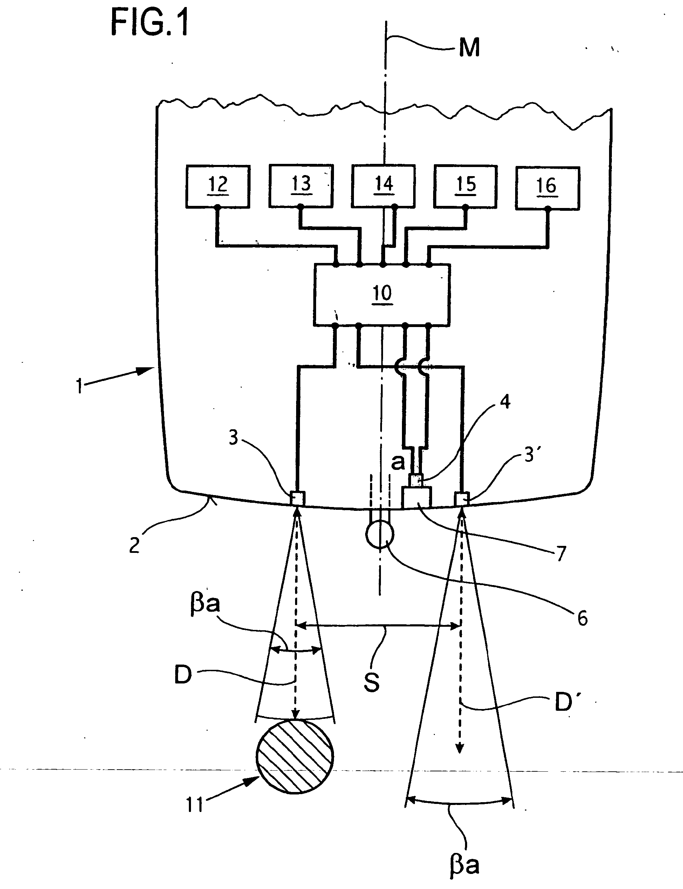

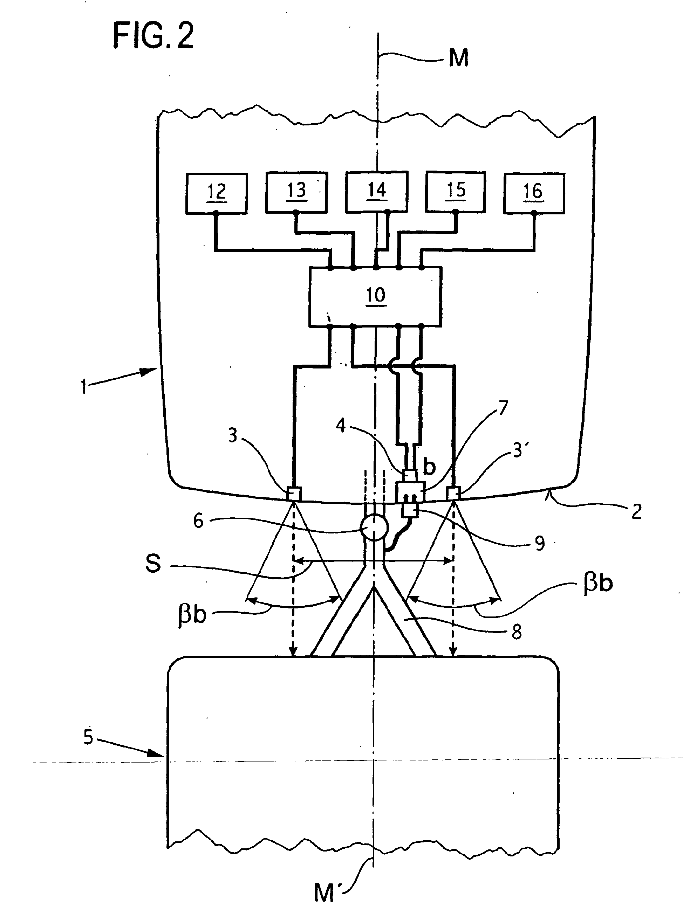

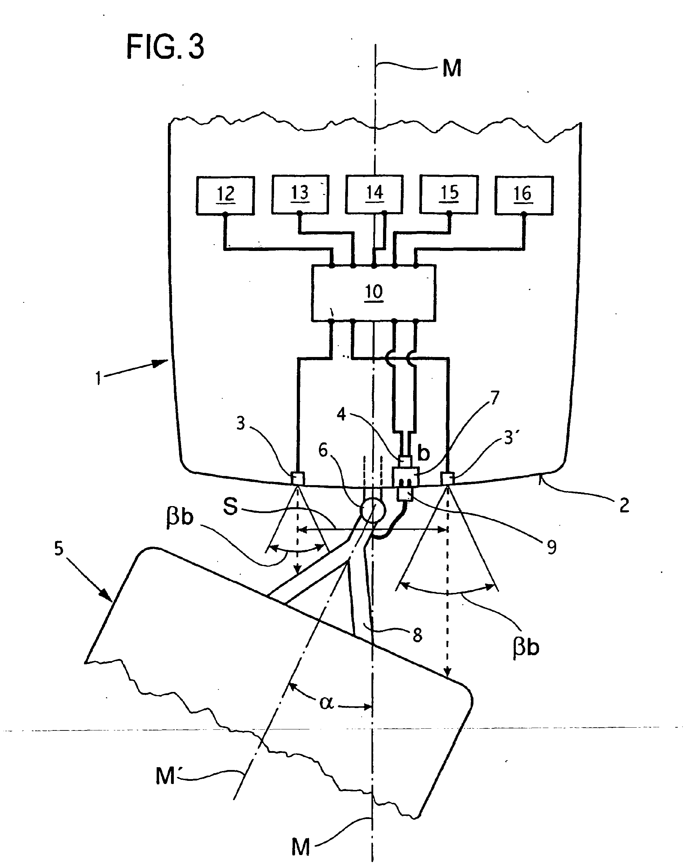

Beim Betrieb des Kraftfahrzeugs 1 wird zunächst das Signal des Erkennungssensors 4 dem Bordcomputer 10 des Kraftfahrzeugs 1 zugeführt. Dort wird dann je nachdem, ob der Erkennungssensor 4 ein erstes Signal a liefert, wonach kein Anhänger 5 an das Kraftfahrzeug 1 angehängt ist, oder ob er ein zweites Signal b liefert, wonach ein Anhänger 5 an das Kraftfahrzeug 1 angehängt ist, entscheiden, ob die beiden Abstandssensoren 3, 3' in einem ersten Betriebsmodus A gemäß Fig. 1 den Abstand D, D' zu einem heckseitigen Hindernis 11 bestimmen und somit als Einparkhilfe dienen oder ob die beiden Abstandssensoren 3, 3' in einem zweiten Betriebsmodus B gemäß Fig. 2 und Fig. 3 den Knickwinkel α zwischen der Mittellängsachse M des Kraftfahrzeugs 1 und der Mittellängsachse M' des Anhängers 5 bestimmen und somit zur Fahrdynamikregelung oder als Rangierhilfe dienen.

Gemäß dem ersten Betriebsmodus A werden die Abstandssensoren 3, 3' so eingestellt, dass sie lediglich während der Rückwärtsfahrt des Kraftfahrzeugs 1 aktiviert sind. Zudem arbeiten die Abstandssensoren 3, 3' in diesem ersten Betriebsmodus A mit einer ersten Abtastfrequenz Fa und einem ersten Abtastwinkel βa, welche auf den bei einer Einparkhilfe relevanten Arbeitsbereich von ca. 300 bis 2000 Millimeter bzw. auf den Abstand zu einem Hindernis 11 abgestimmt sind. Durch den Bordcomputer 10 wird der Abstand D, D' zwischen dem Kraftfahrzeug 1 und dem heckseitigen Hindernis 11 dann in bekannter Weise anhand der Laufzeit ermittelt, die das von einem bzw. beiden der Abstandssensoren 3, 3' ausgesandte und an dam Hindernis 11 reflektierte Signal benötigt, bis es den betreffenden Abstandssensor 3, 3' wieder erreicht.

Der so ermittelte Abstand D bzw. D' wird dem Fahrer des Kraftfahrzeugs 1 mittels einer Einrichtung zur Einparkhilfe 12 optisch und/oder akustisch angezeigt.

Und gemäß dem zweiten Betriebsmodus B sind die Abstandssensoren 3, 3' sowohl während der Vorwärtsfahrt als auch während der Rückwärtsfahrt des Kraftfahrzeugs 1 aktiviert. Während des zweiten Betriebsmodus B arbeiten die Abstandssensoren 3, 3' mit einer zweiten Abtastfrequenz Fb und einem zweiten Abtastwinkel βb, welche auf den für eine Bestimmung des Knickwinkels α relevanten Arbeitsbereich von ca. 300 bis 500 Millimeter bzw. dem Abstand der Deichsel 8 des Anhängers 5 abgestimmt sind. Durch den Bordcomputer 10 wird der Knickwinkel α zwischen der Mittellängsachse M des Kraftfahrzeugs 1 und der Mittellängsachse M' des Anhängers 5 anhand der bestimmten Entfernung S zwischen den beiden Abstandssensoren 3, 3' sowie anhand einer Annäherung der drehbar an der Anhängerkupplung 6 gelagerten Deichsel 8 des Anhängers 5 an das Heck 2 bzw. die Abstandssensoren 3, 3' des Kraftfahrzeugs 1 ermittelt.

In dem Beispiel aus Fig. 2 findet keine seitliche Annäherung der Deichsel 8 des Anhängers 5 an die Abstandssensoren 3, 3' statt und fallen die Mittellängsachse M des Kraftfahrzeugs 1 und die Mittellängsachse M' des Anhängers 5 zusammen, so dass der Knickwinkel α gleich Null ist.

In dem Beispiel aus Fig. 3 findet dagegen eine deutliche seitliche Annäherung der Deichsel 8 des Anhängers 5 an den linken Abstandssensor 3 statt und schließen die Mittellängsachse M des Kraftfahrzeugs 1 und die Mittellängsachse M' des Anhängers 5 einen Knickwinkel α ein. Eine solche seitliche Annäherung erfolgt beispielsweise bei der Vorwärtsfahrt des Kraftfahrzeugs 1 in einer Linkskurve oder bei der Rückwärtsfahrt des Kraftfahrzeugs 1 mit einer nach rechts eingeschlagenen Lenkung.

Der vom Bordcomputer 10 ermittelte Knickwinkel α wird daraufhin einer den Fahrer des Kraftfahrzeugs 1 unterstützenden Einrichtung zur Fahrdynamikregelung 13 und/oder einer Einrichtung zur Rangierhilfe 14 zugeführt.

Mittels der Fahrdynamikregelung 13 wird insbesondere die schnelle gerade Vorwärtsfahrt des Kraftfahrzeugs 1 überwacht. Denn bei schwankenden Knickwinkeln α droht ein Ausbrechen oder Umkippen des Anhängers 5, was durch ein Abbremsen des Anhängers 5 vermieden werden kann.

Und mittels der Rangierhilfe 14 wird die Rückwärtsfahrt des Kraftfahrzeugs 1 überwacht, wodurch dem Fahrer des Kraftfahrzeugs 1 die Rückwärtsfahrt erleichtert wird. Zudem zeigt die Rangierhilfe 14 dem Fahrer an, wann zu große Knickwinkel α erreicht werden, bei welchen eine Beschädigung der mechanischen Verbindung von Kraftfahrzeug 1 und Anhänger 5 droht.

Während der durch Lenkwinkelsensoren 15 und Getriebesensoren 16 erkennbaren langsamen geraden Vorwärtsfahrt des Kraftfahrzeugs 1 wird außerdem überprüft, ob der ermittelte Knickwinkel α dem Wert "Null" entspricht. Ist dies nicht der Fall, so findet über den Bordcomputer 10 ein Abgleich bzw. eine Korrektur des Knickwinkels α auf den Wert "Null" statt, so dass die Knickwinkelerkennung zum Beispiel auch bei einem Gespann aus einem Kraftfahrzeug 1 und einem Anhänger 5 mit einer unsymmetrischen Frontseite einwandfrei funktioniert.

Bezugszeichenliste:
- 1: Kraftfahrzeug
- 2: Heck
- 3, 3': Abstandssensoren
- 4: Erkennungssensor
- 5: Anhänger
- 6: Anhängerkupplung
- 7: Steckdose
- 8: Deichsel
- 9: Stecker
- 10: Bordcomputer
- 11: Hindernis
- 12: Einrichtung zur Einparkhilfe
- 13: Einrichtung zur Fahrdynamikregelung
- 14: Einrichtung zur Rangierhilfe
- 15: Lenkwinkelsensoren
- 16: Getriebesensoren

- S: Entfernung zwischen 3 und 3'
- A: erster Betriebsmodus
- B: zweiter Betriebsmodus
- D, D': Abstand von 3 bzw. 3' zu 11
- α: Knickwinkel
- M, M': Mittellängsachse von 1, bzw. 5
- a: Signal "ohne Anhänger"
- b: Signal "mit Anhänger"
- Fa: erste Abtastfrequenz
- Fb: zweite Abtastfrequenz
- βa: erster Abtastwinkel
- βb: zweiter Abtastwinkel

## Patentansprüche

1. Kraftfahrzeug mit
wenigstens zwei am Heck (2) angeordneten Abstandssensoren (3, 3') die in einer bestimmten Entfernung voneinander symmetrisch zur Mittellängsachse (M) des Kraftfahrzeugs (1) positioniert sind,
**dadurch gekennzeichnet, dass**
ein Erkennungssensor (4) zur Erkennung eines angehängten Anhängers (5) vorgesehen ist und die beiden Abstandssensoren (3, 3') in Abhängigkeit von dem Signal (a, b) des Erkennungssensors (4) in einem ersten Betriebsmodus (A) oder in einem zweiten Betriebsmodus (B) arbeiten, wobei sie im ersten Betriebsmodus (A), wenn kein Anhänger (5) angehängt ist, zur Bestimmung des Abstands (D, D') zu einem heckseitigen Hindernis (11) bzw. als Einparkhilfe dienen und wobei sie im zweiten Betriebsmodus (B), wenn ein Anhänger (5) angehängt ist, zur Bestimmung des Knickwinkels (α) zwischen der Mittellängsachse (M) des Kraftfahrzeugs (1) und der Längsachse (M') des Anhängers (5) dienen, indem die Abstandssensoren (3, 3') aus einer Annäherung der Deichsel (8) des Anhängers (5) den Knickwinkel (α) ermitteln.

2. Kraftfahrzeug nach Anspruch 1, **dadurch gekennzeichnet, dass** die Abstandsensoren (3, 3') in ihrem ersten Betriebsmodus (A) mit einer anderen Abtastfrequenz (Fa) arbeiten als in ihrem zweiten Betriebsmodus (B).

3. Kraftfahrzeug nach Anspruch 1 oder 2, **dadurch gekennzeichnet, dass** die Abstandssensoren (3, 3') in ihrem ersten Betriebsmodus (A) mit einem anderen Abtastwinkel (βa) arbeiten als in ihrem zweiten Betriebsmodus (B).

4. Kraftfahrzeug nach einem der Ansprüche 1 bis 3, **dadurch gekennzeichnet, dass** der ermittelte Knickwinkel (α) während der geraden Vorwärtsfahrt anhand von Lenkwinkelsensoren (15) und Getriebesensoren (16) auf "Null" abgeglichen wird.

5. Kraftfahrzeug nach einem der Ansprüche 1 bis 4, **dadurch gekennzeichnet, dass** der ermittelte Knickwinkel (α) einer Einrichtung zur Fahrdynamikregelung (13) zugeführt wird.

6. Kraftfahrzeug nach einem der Ansprüche 1 bis 5, **dadurch gekennzeichnet, dass** der ermittelte Knickwinkel (α) einer Einrichtung zur Rangierhilfe (14) zugeführt wird.

7. Kraftfahrzeug nach einem der Ansprüche 1 bis 6, **dadurch gekennzeichnet, dass** der Erkennungssensor (4) in eine Steckdose (7) für die elektrische Anbindung des Anhängers (5) integriert ist.

## Claims

1. Motor vehicle comprising at least two proximity sensors (3, 3') arranged at the rear (2) and positioned at a predetermined distance from one another symmetrically to the centre longitudinal axis (M) of the motor vehicle (1), **characterised in that** a sensor (4) is provided to detect an attached trailer (5) and the two proximity sensors (3, 3') operate in a first operating mode (A) or in a second operating mode (B) as a function of the signal (a, b) from the sensor (4), wherein, in the first operating mode (A) when no trailer (5) is attached, they serve to determine the distance (D, D') from an obstruction (11) at the rear or as a parking aid and, in the second operating mode (B) when a trailer (5) is attached, they serve to determine the articulation angle (α) between the centre longitudinal axis (M) of the motor vehicle (1) and the longitudinal axis (M') of the trailer (5) **in that** the proximity sensors (3, 3') determine the articulation angle (α) as the drawbar (8) of the trailer (5) approaches.

2. Motor vehicle according to claim 1, **characterised in that** the proximity sensors (3, 3') operate at a different sampling frequency (Fa) in their first operating mode (A) from that in their second operating mode (B).

3. Motor vehicle according to claim 1 or claim 2, **characterised in that** the proximity sensors (3, 3') operate at a different sampling angle (βa) in their first operating mode (A) from that in their second operating mode (B).

4. Motor vehicle according to one of claims 1 to 3, **characterised in that** the articulation angle (α) determined is adjusted to "zero" during straight-ahead driving by way of steering-angle sensors (15) and transmission sensors (16).

5. Motor vehicle according to one of claims 1 to 4, **characterised in that** the articulation angle (α) determined is supplied to a vehicle dynamics controller (13).

6. Motor vehicle according to one of claims 1 to 5, **characterised in that** the articulation angle (α) determined is supplied to a manoeuvring aid (14).

7. Motor vehicle according to one of claims 1 to 6, **characterised in that** the sensor (4) is integrated into a socket (7) for the electrical connection of the trailer (5).

## Revendications

1. Véhicule automobile comprenant
au moins deux capteurs de distance (3, 3') disposés à l'arrière (2), qui sont positionnés, selon un écartement déterminé l'un de l'autre de manière symétrique par rapport à l'axe longitudinal médian (M) du véhicule automobile (1),
**caractérisé en ce**
**qu'**il est prévu un capteur de détection (4) destiné à détecter une remorque (5) attelée et les deux capteurs de distance (3, 3') fonctionnent selon le signal (a, b) du capteur de détection (4) dans un premier mode de fonctionnement (A) ou dans un second mode de fonctionnement (B), grâce à quoi, dans un premier mode de fonctionnement (A), lorsque aucune remorque (5) n'est attelée, ils servent à déterminer la distance (D, D') par rapport à un obstacle arrière (11) en tant qu'auxiliaire de stationnement et, dans le second mode de fonctionnement (B), lorsqu'une remorque (5) est attelée, ils servent à déterminer l'angle de flèche (α) entre l'axe longitudinal médian (M) du véhicule automobile (1) et l'axe longitudinal (M') de la remorque (5), en ce que les capteurs de distance (3, 3') déterminent l'angle de flèche (α) à partir d'un rapprochement du timon (8) de la remorque (5).

2. Véhicule automobile selon la revendication 1, **caractérisé en ce que** les capteurs de distance (3, 3') fonctionnent dans leur premier mode de fonctionnement (A) avec une autre fréquence de balayage (Fa) que dans leur second mode de fonctionnement.

3. Véhicule automobile selon la revendication 1 ou 2, **caractérisé en ce que** les capteurs de distance (3, 3') fonctionnent dans leur premier mode de fonctionnement (A) avec un autre angle de balayage (βa) que dans leur second mode de fonctionnement.

4. Véhicule automobile selon l'une quelconque des revendications 1 à 3, **caractérisé en ce que** l'angle de flèche (α) déterminé est réglé sur « zéro » pendant la marche avant droite à l'aide de capteurs d'angle de direction (15) et de capteurs de transmission (16).

5. Véhicule automobile selon l'une quelconque des revendications 1 à 4, **caractérisé en ce que** l'angle de flèche (α) déterminé est amené à un système de régulation de dynamique du mouvement du véhicule (13).

6. Véhicule automobile selon l'une quelconque des revendications 1 à 5, **caractérisé en ce que** l'angle de flèche (α) déterminé est amené à un système d'aide auxiliaire à la manoeuvre (14).

7. Véhicule automobile selon l'une quelconque des revendications 1 à 6, **caractérisé en ce que** le capteur de détection (4) est intégré dans une prise femelle (7) pour le raccordement électrique de la remorque (5).
